# EUROPÄISCHE PATENTSCHRIFT

(11) **EP 3 356 980 B1**
(45) Veröffentlichungstag und Bekanntmachung des Hinweises auf die Patenterteilung: **04.09.2019**
(21) Anmeldenummer: 16785106.2
(22) Anmeldetag: 29.09.2016
(51) Int. Cl.: G06F 21/31, G06F 21/35, H04L 29/06, G06F 21/34

(54) **VERFAHREN UND VORRICHTUNG ZUR AUTHENTIFIKATION EINES OBJEKTS ODER EINER PERSON ÜBER EIN MODULARTIG AUFGEBAUTES SICHERHEITSELEMENT**
METHOD AND DEVICE FOR AUTHENTICATION OF AN OBJECCT OR OF A PERSON BY MEANS OF A MODULARLY CONSTRUCTED SECURITY ELEMENT
PROCÉDÉ ET APPAREIL POUR L'AUTHENTIFICATION D'UN OBJET OU D'UNE PERSONNE MOYENNANT UN ÉLÉMENT DE SÉCURITÉ CONSTRUIT DE MANIÈRE MODULAIRE

(30) Priorität: 30.09.2015 DE 102015116627
(43) Veröffentlichungstag der Anmeldung: 08.08.2018
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2016/073222
(87) Internationale Veröffentlichungsnummer: WO 2017/055422

(56) Entgegenhaltungen:
- WO-A2-2011/006640
- GB-A- 2 510 443
- US-A1- 2008 148 352

## Beschreibung

### Technisches Gebiet:

Die vorliegende Erfindung betrifft ein Verfahren und eine Vorrichtung zur Authentifikation eines Objekts oder einer Person durch ein dem Objekt oder der Person individuell zugeordnetes, modular aufgebautes dynamisches Sicherheitselement.

### Stand der Technik:

Zur Authentifizierung einer Person oder von Objekten sind unterschiedliche Verfahren und Sicherheitssysteme bekannt, um eine Identifikation möglichst fälschungssicher und angriffssicher zu machen. Dabei werden zumeist individualisierende Merkmale wie Passwörter, biometrische Merkmale, Hologramme oder physikalisch/chemisch messbare Sicherheitskennzeichen einem bestimmten Objekt, einem Dienst oder einer Person zugeordnet. Bei der Authentifikation wird das jeweilige Sicherheitsmerkmal erfasst und mit hinterlegten Referenzmerkmalen verglichen. Liegt ein bestimmter Übereinstimmungsgrad der übermittelten Sicherheitsmerkmale mit den Referenzmerkmalen vor, so ist das Objekt oder die Person positiv authentifiziert. Unabhängig von der Art und dem Aufbau des für die Authentifikation verwendeten Sicherheitselements basieren solche Authentifizierungen zumeist auf statischen Sicherheitsmerkmalen, die zumindest für einen bestimmten Zeitraum unverändert bleiben. Statische Sicherheitsmerkmale können jedoch, mit entsprechendem Aufwand, leicht gefälscht werden.

Zwar gibt es auch Verfahren, bei denen beispielsweise ein Code oder ein Passwort über einen Algorithmus oder andere Sicherheitskennzeichen in einem Zeitraum dynamisch verändert werden, um den Code oder das Passwort sicherer zu machen, jedoch verlaufen solche Verfahren zumeist automatisiert im Hintergrund, ohne dass der Nutzer direkten Einfluss nehmen kann. So beschreibt die GB 2 265 482 A ein Verfahren zur Übermittlung eines dynamischen Codes als Sicherheitsmerkmal, der sich gemäß einem Algorithmus verändert.

Daneben sind auch Bestrebungen unternommen worden, um beispielsweise physikalische Eigenschaften eines Stoffes als Sicherheitskennzeichen auszunutzen. So beschreibt die EP 1 158 459 A1 ein Verfahren, bei dem als Referenzmerkmal die Lumineszenzkurve einer lumineszierenden Sonde verwendet wird, das als Basis für eine Authentifikation dient. Für eine Authentifikation wird eine ermittelte Lumineszenzkurve über einen Punkt-zu-Punkt-Vergleich anhand des Lumineszenzverfalls mit der hinterlegten Referenzkurve verglichen.

Daneben gibt es Sicherheitskennzeichen, die auf Zufallsmuster basieren, welche auf dem zu kennzeichnenden Objekt, z.B. einem Produkt, aufgebracht werden. Aufgrund der Komplexität eines chaotischen Zufallsmusters soll die Sicherheit erhöht werden. Ein solches Verfahren ist in der DE 103 04 805 A1 beschrieben. Dabei wird aus dem eingelesen Zufallsmuster ein Fingerabdruck extrahiert, der die individuellen Merkmale des Musters beinhaltet.

Daneben gibt es auch dynamische Merkmale, die sich aufgrund externer oder interner Einflüsse verändern können. Ein solches Sicherheitselement ist beispielsweise in der DE 10 2009 033 221 A1 bzw. WO 2011/006640 A2 beschrieben, bei der das Sicherheitselement zumindest bereichsweise ein Krakeleemuster in Form von Rissen oder Sprüngen, Ausbrüchen, Abnutzungen oder Schrumpfungen sowie möglichen Verunreinigungen aufweist, die als Sicherheitsmerkmale abtastbar und erfassbar sind. Ein ähnlicher Ansatz wurde in dem US-Patent 7,793,837 B1 verfolgt.

Die US 2008/0148352 A1 beschreibt eine Authentifikationsvorrichtung, bei der ein Benutzer über eine Karte mit darin eingeformten Löchern authentifiziert wird. Alternativ können auch transparente Abschnitte verwendet werden, die an unterschiedlichen Positionen auf der Kartenoberfläche vorhanden sind. Über die bekannte Anordnung der Löcher bzw. transparenten Bereiche entsteht ein Sicherheitsmuster, das für Authentifikationszwecke herangezogen werden kann.

Auch wenn beispielsweise auf einem Geldschein oder einer Kreditkarte unterschiedliche Sicherheitsmerkmale aufgebracht oder integriert sind, so sind diese Merkmale hinsichtlich der Aufmachung und Anordnung starr und nicht ohne weiteres veränderbar. Eine Nummer, ein Hologramm oder ein Magnetstreifen wird immer an derselben Position des Objekts (z.B. dem Geldschein oder der Kreditkarte) verbleiben. Ein Fälscher kann daher, mit entsprechendem Aufwand, eine Kopie des Sicherheitselements erzeugen, was bei sich dynamisch verändernden Sicherheitselementen weit schwieriger ist, da hier der Fälscher den zum Zeitpunkt der Authentifikation gültigen Zustand der Sicherheitsmerkmale nicht kennt.

Modulartige Bausteine sind bereits bekannt. So beschreibt die US 2014/0189798 A1 ein dreidimensionales Würfelobjekt, bei dem einzelne Bausteine mit Texturen versehen sind. Dabei werden einzelne 3D-Elemente zufällig verändert, beispielsweise deren Position oder Orientierung in Bezug auf die anderen 3D-Elemente, um diese dann wieder zu einem korrekten Muster zusammenzufügen. Ziel des Verfahrens ist es festzustellen, ob das Zusammenfügen des Musters durch eine Maschine oder einen Menschen erfolgt. Die Ausführungsvariante geht davon aus, dass die Wiederherstellung des Musters nur einem Menschen gelingen wird. Die Verwendung solcher 3D-Elemente zur Authentifikation ist nicht Bestandteil dieser Druckschrift.

Die GB 25 10 443 A1 beschreibt ebenfalls einen Würfel, auf dessen Oberflächen unterschiedliche Symbole angeordnet sind. Die Anordnung der Symbole wird von einem Kamerasystem erfasst und mit einem in einer Datenbank hinterlegten Abbild verglichen. Eine Veränderung der Module zwischen zwei Abfragezeitpunkten ist nicht vorgesehen.

Die US 2011/0090145 A1 beschreibt einen Würfel, bei dem Input-Flächen vorgesehen sind, um beispielsweise einen Code (Passwort oder ID-Daten) für eine Authentifikation einzugeben. Durch das dreidimensionale Tape werden somit lediglich mehr Input-Flächen geschaffen, als es beispielsweise bei einem Touch-Display oder einer Computertastatur der Fall ist. Ansonsten sind auch Puzzlespiele bekannt, die bereits unterschiedliche Gestaltungsformen annehmen können, beispielsweise beschrieben in der US 3,655,201.

### Darstellung der Erfindung:

Vor diesem Hintergrund ist es Aufgabe der vorliegenden Erfindung, ein alternatives Authentifikationsverfahren und eine Authentifikationsvorrichtung bereitzustellen, mit dem/der ein Objekt oder eine Person über ein sich dynamisch veränderndes Sicherheitselement identifizierbar/authentifizierbar ist und das über einen Nutzer selbst verändert werden kann.

Diese Aufgabe wird gelöst durch ein Verfahren mit den Merkmalen des Anspruchs 1. Bevorzugte Ausführungsformen finden sich in den Unteransprüchen wieder.

Das erfindungsgemäße Verfahren ermöglicht eine Authentifikation eines Objekts oder einer Person durch ein dem Objekt oder der Person individuell zugeordnetes Sicherheitselement, das mehrere Sicherheitsmerkmale für die Authentifikation des Objekts oder der Person aufweist.

Der Begriff "Objekt" im Sinne der vorliegenden Erfindung soll breit aufgefasst werden und umfasst beispielsweise jegliche Art von Gegenständen, aber auch Computerprogramme oder Dienste eines Dienstleistungsanbieters (beispielsweise eines Bezahlsystems). Typische zu identifizierende Gegenstände sind beispielsweise Dokumente, Wertschriften, Wertzeichen, Etiketten, Geldscheine, Banknoten, Ausweise, Identitätskarten, Kreditkarten, Reisepässe, Tickets, Führerscheine, Fahrzeugdokumente, Postwertzeichen, Etiketten, Vignetten, Kunstgegenstände, Möbel, Messgeräte, Maschinen und Maschinenteile, Fahrzeuge, technische Apparate, Kommunikationseinrichtungen, Mobiltelefone, Computer, Datenträger, Drucksachen, Bücher, Stoffe, Produkte, technische Geräte, Werkzeuge, Papier und Kartons, Verpackungen oder auch Lebewesen wie Menschen, Tiere oder Pflanzen.

Unter dem Begriff "veränderbares Modul" versteht man ein Modul, das entweder selbst oder relativ zu anderen Modulen in seiner Form, Position, Anordnung, Aufmachung verändert werden kann. Dies kann beispielsweise durch ein Verschieben oder ein Verdrehen, ein Verformen oder ein Lösen/Verbinden einzelner oder mehrerer Module erfolgen. Ferner können die Module auch dadurch verändert werden, dass auf oder in der Oberfläche einer Modulseite ein Sicherheitsmerkmal aufgebracht oder eingebracht wird. Außerdem können die Module sich untereinander beeinflussen und demzufolge je nach Lage zueinander ihre Eigenschaften ändern. Dies kann zum Beispiel der Fall sein, wenn ein Modul, welches einen Induktionsstrom produziert neben einem Modul zu liegen kommt, welches Induktionsstrom aufnimmt und infolge dessen die Farbe ändert oder zu leuchten beginnt.

Das erfindungsgemäße Sicherheitselement besteht aus mehreren veränderbaren Modulen mit mehreren Oberflächen. Vorzugsweise sind die Module am Sicherheitselement beweglich, verdrehbar oder lösbar miteinander verbunden. Vorzugsweise handelt es sich bei den Modulen um dreidimensionale Bauteile oder Körper, die entweder beweglich zusammengehalten werden oder miteinander über entsprechende Kopplungsteile lösbar miteinander verbunden werden können. Dabei bilden mehrere zusammengesetzte dreidimensionale Module das eigentliche Sicherheitselement. Zumindest ein Teil der Module weist spezifische Sicherheitsmerkmale auf, die ein bestimmtes Erscheinungsbild oder eine Eigenschaft des Sicherheitselements (beispielsweise eine physikalische oder chemische Eigenschaft) ergeben, das/die über entsprechende Erfassungseinrichtungen erfassbar sind. Die Sicherheitsmerkmale sind vorzugsweise auf einer der Oberflächen der Module ausgebildet, können jedoch auch im Innern liegen, oder eine Materialeigenschaft darstellen. Beispielsweise können ein oder mehrere Module verformbar sein und ein Formgedächtnis aufweisen. Eine dynamische Veränderung des Sicherheitsmerkmals entsteht bei dieser Variante durch eine Verformung, wodurch ein verändertes Erscheinungsbild erzeugt wird.

Das erfindungsgemäße Sicherheitselement ist dynamisch veränderbar, vorzugsweise indem sich die auf den Modulen angeordneten Sicherheitsmerkmale dynamisch verändern oder indem sich die Module selbst oder deren Lage, Form, Aufmachung oder eine sonstige Eigenschaft in Bezug auf eine Referenz eines früheren Zeitpunktes verändert. Vorzugsweise ist vorgesehen, dass sich einzelne oder mehrere Sicherheitsmerkmale oder Module oder die Module selbst zwischen zwei Authentifikationszeitpunkten dynamisch verändern. Dabei können sich einzelne Module auch gegenseitig beeinflussen und die Veränderung dadurch bewirken.

Die dynamische Sicherheit entsteht beispielsweise dadurch, dass die einzelnen Module auf unterschiedliche Art und Weise miteinander zu einem dreidimensionalen Sicherheitselement angeordnet werden können, wodurch sich das Erscheinungsbild oder die Eigenschaft des Sicherheitselements auf einer oder mehreren Seiten verändert. Vorzugsweise bestehen die Module aus einem geometrischen Körper, beispielsweise einem Würfel, einem Quader, einem Zylinder, einer Pyramide oder einer Kugel, die zu einem dreidimensionalen Gebilde oder Gewirke verknüpft werden können. Dabei weist vorzugsweise jede Oberfläche eines Moduls unterschiedliche Sicherheitsmerkmale auf. Beim Beispiel können bei einem Würfel aufgrund der sechs vorhandenen Oberflächen zumindest sechs unterschiedliche Seiten mit Sicherheitsmerkmalen ausgestattet werden, da jede einzelne Oberfläche eines Moduls oder auch Teile davon das Erscheinungsbild des Sicherheitselements prägen. Kombiniert man nun eine Vielzahl von einheitlichen oder unterschiedlichen Modulen zu einem komplexen Sicherheitselement, so erhält man eine Vielzahl von möglichen Kombinationen oder Anordnungen, die das Erscheinungsbild des Sicherheitselements charakteristisch verändern.

Ein weiterer, sicherheitserhöhender Faktor besteht darin, dass ein möglicher Fälscher nicht weiß, welche Seite oder welche Module des dreidimensionalen Sicherheitselements von der Erfassungseinrichtung erfasst werden. Auch weitere sicherheitserhöhende Parameter, wie beispielsweise der Abtastwinkel oder der von der Erfassungseinrichtung ausgewählte Erfassungsbereich des Sicherheitselements, ergeben weitere Variablen, welche die Sicherheit erhöhen. In einer bevorzugten Ausführungsform tastet die Erfassungseinrichtung daher das Sicherheitselement mit unterschiedlichen Abtastwinkeln, Ausschnitten oder Perspektiven ab. Vorzugsweise wird das Sicherheitselement über unterschiedliche Erfassungseinrichtungen analysiert, beispielsweise durch Analyse der Oberflächenstruktur, des Erscheinungsbildes oder einer physikalischen/chemischen Eigenschaft.

Erfindungsgemäß kommt nun in einer Variante bevorzugt hinzu, dass wenigstens ein Sicherheitsmerkmal des Sicherheitselements zwischen zwei Abfragezeitpunkten veränderbar ist, d.h. das Sicherheitselement durchläuft einen dynamischen Veränderungsprozess. Der dynamische Veränderungsprozess kann entweder die Veränderung wenigstens eines Sicherheitsmerkmales des Sicherheitselementes umfassen oder eine Änderung der Module selbst. Dies kann beispielsweise die Position, die Form, die Aufmachung, das Erscheinungsbild, die Lage der Module im Verhältnis zu anderen Modulen oder eine sonstige Eigenschaft der Module betreffen. Die Veränderung kann durch den Nutzer selbst, einen externen Faktor oder durch ein inhärentes Auslösemittel (zum Beispiel eine Eigenschaft eines Stoffes, eine physikalische oder chemische Veränderung einer Stoffeigenschaft) erfolgen. Es ist jedoch auch möglich, dass eine Authentifikationseinrichtung dem Nutzer ein bestimmtes Erscheinungsbild für die Authentifikation vorgibt, so dass dieser das Sicherheitselement durch das Anordnen der Module entsprechend angleichen muss.

In einer weiteren Variante kann vorgesehen sein, dass die Erfassungseinrichtung selbst (beispielsweise eine Kamera oder ein Sensor) eine Veränderung der Module bewirkt. Dies kann beispielsweise über Wärmeeinwirkung, Strahlung, Bedruckung oder eine mechanische Einwirkung erfolgen.

In einer bevorzugten Ausführungsform wird das Sicherheitselement in einen "inaktiven" Zustand überführt, in dem ein oder mehrere Modulbausteine an unterschiedlichen Orten aufbewahrt oder bewusst am Sicherheitselement verändert werden. So kann beispielsweise ein Modul verdreht oder an einer anderen Stelle des Sicherheitselementes mit einem benachbarten Modul verlagert werden, wodurch sich das Erscheinungsbild des Sicherheitselements verändert. Dadurch kann bei einem Verlust oder Diebstahl keine Authentifikation erfolgen, da die nicht autorisierte Person nicht den "aktiven Zustand" des Sicherheitselements kennt, um die Module zu einem für die Authentifikation gültigen Sicherheitselement zusammenzufügen.

Vorzugsweise erfolgt eine Reduktion der Berechtigungen durch Entnahme oder Hinzufügen von Modulen oder Sicherheitsmerkmalen des Sicherheitselementes, wobei auch neue Module aktiviert oder bestehende Module deaktiviert werden können. Die Reduktion kann stufenweise erfolgen und je nach Berechtigung unterschiedlich gewichtet werden. So kann sichergestellt werden, dass ein Nutzer Zugang nur zu bestimmten autorisierten Bereichen erhält. Daneben bietet eine temporäre Deaktivierung des Sicherheitselementes auch eine höhere Sicherheit, da bei einem Verlust des Sicherheitselements der Angreifer nicht das aktive Erscheinungsbild und den aktiven Status kennt. Für die Authentifikation ist das Sicherheitselement dann wieder durch das Wiederherstellen des gültigen Zustands aktivierbar. Auch der umgekehrte Weg ist möglich, nämlich dass Berechtigungen durch aktive Zustände des Sicherheitselements erteilt werden, vorzugsweise durch das Definieren unterschiedlicher aktiver Zustände für die jeweilige Berechtigung.

In einer weiteren Variante kann auch vorgesehen sein, dass ein oder mehrere Module von dem eigentlichen Sicherheitselement getrennt oder geteilt und an für eine positive Authentifikation unterschiedlichen Orten gelagert werden. Das Sicherheitselement ist erst dann vollständig und "aktiv", wenn die einzelnen Module wieder zu dem korrekten, gültigen Sicherheitselement zusammengefügt werden. So ist es möglich, auch einzelne Modulbausteine auf unterschiedliche Personen oder Orte aufzuteilen. Erst bei der korrekten Kombination der einzelnen Modulbausteine zu dem für die Authentifikation vorgesehenen Sicherheitselement kann eine positive Authentifikation der Person oder des Objekts erfolgen. Auf diese Weise können auch einzelne Berechtigungen gesteuert werden, indem beispielsweise ein oder mehrere Modulbausteine zu einem bestimmten Erscheinungsbild angeordnet werden müssen, um Zugang zu erhalten. Auch "Sperrmodule" sind möglich, mit denen beispielsweise ein Service-Provider einen Nutzer von einer Anmeldung ausschließen kann, wenn sich in dem Sicherheitselement ein derartiges Modul befindet.

Im Rahmen einer Authentifikation oder Vorauthentifikation kann auch festgelegt werden, dass eine bestimmte Anzahl von Veränderungen vorliegen muss, damit ein Benutzer positiv authentifiziert ist. Ferner kann auch die Anzahl von Veränderungen festgelegt werden, beispielsweise die minimale und maximale Anzahl von Veränderungen ausgehend vom Ursprungszustand. Dies hat den Vorteil, dass zum Schutz vor einem Missbrauch der Nutzer absichtlich eine Veränderung vornehmen kann, die beim nächsten Authentifizierungsvorgang rückgängig gemacht werden muss, um das Sicherheitsmerkmal für eine positive Authentifikation zu aktivieren.

Für eine Authentifikation ist ein Abgleich der Sicherheitsmerkmale mit entsprechenden Referenzmerkmalen notwendig, wofür in einer zentralen Datenbank ein Erscheinungsbild oder eine Eigenschaft des Sicherheitselements als Referenzmerkmal hinterlegt wird. Zum Abfragezeitpunkt wird das Erscheinungsbild oder eine Eigenschaft des veränderten Sicherheitselements erfasst und zur Authentifikation des Objekts oder der Person mit dem in der Datenbank hinterlegten Referenzmerkmal verglichen. Liegt ein zuvor definierter Übereinstimmungsgrad zwischen dem erfassten Sicherheitsmerkmal und dem in der Datenbank hinterlegten Referenzmerkmal vor, so ist eine Authentifikation positiv.

In einer bevorzugten Ausführungsform wird bei einer positiven Authentifikation ein verändertes Sicherheitselement als neues Referenzmerkmal hinterlegt. So kann beispielsweise ein Nutzer die einzelnen Module unterschiedlich kombinieren und damit ein neues Sicherheitselement mit neuen individuellen Sicherheitsmerkmalen schaffen. Dieses wird sich in zumindest einem Merkmal, vorzugsweise in einer Reihe von Merkmalen, von dem ursprünglichen Sicherheitselement unterscheiden, je nachdem, wie viele Module des Sicherheitselements verändert werden. Durch die modulartige Anordnung des Sicherheitselements weiß nur der Nutzer, wie er die einzelnen Module zu dem korrekten Erscheinungsbild anordnen muss.

In einer bevorzugten Ausführungsform kann festgelegt werden, dass sich das Sicherheitsmerkmal entsprechend einer zuvor festgelegten Regel verändern muss. So kann eine Regel vorsehen, dass das Sicherheitselement niemals zweimal identisch sein darf. Eine weitere Regel kann vorsehen, dass das Sicherheitselement zu bestimmten Zeitpunkten ein bestimmtes Erscheinungsbild aufweisen muss. Auch das Zulassen bzw. Nicht-Zulassen bestimmter Module für eine Authentifikation kann Bestandteil einer Regel sein.

Vorzugsweise ist vorgesehen, dass für eine positive Authentifikation vorgesehen ist, dass das zum Abfragezeitpunkt vorliegende Sicherheitselement sich gegenüber dem in der Datenbank hinterlegten Referenzmerkmal teilweise verändert hat, wobei der Veränderungsgrad so bestimmt ist, dass sich bestimmen lässt, dass das zum Abfragezeitpunkt vorliegende Sicherheitselement aus dem in der Datenbank hinterlegten Referenzmerkmal hervorgegangen ist.

Die dynamische Veränderung des Sicherheitsmerkmals der Module oder der Module selbst erfolgt kontinuierlich, wodurch ein geändertes Erscheinungsbild oder Eigenschaft des veränderten Sicherheitselementes entsteht, das mit dem in der Datenbank hinterlegten Referenzmerkmal verwandt ist. Eine Fälschung des Sicherheitselements würde so schnell entdeckt werden, das es sich anders weiterentwickelt als das Original. Beim nächsten Authentifikationsversuch würde das System Alarm auslösen und die Fälschung dadurch entlarven. Der Nutzer des Originals ist gewarnt.

Erfindungsgemäß kann eine Fälschung dadurch entdeckt werden, dass sich wenigstens ein Sicherheitsmerkmal eines Moduls oder mehrerer Module oder die Module selbst zwischen zwei Abfragezeitpunkten oder innerhalb einer sonstigen definierten Zeitspanne verändert haben. Dabei ist vorgesehen, dass der Veränderungsgrad so definiert ist, dass eine verwandtschaftliche Beziehung zu dem in der Datenbank hinterlegten Referenzmerkmal vorhanden ist, d. h. das zum Abfragezeitpunkt vorliegende Sicherheitsmerkmal hat sich gegenüber dem in der Datenbank hinterlegten Referenzmerkmal vorzugsweise nur geringfügig verändert, beispielsweise ist ein Veränderungsgrad von <10 % bevorzugt. In einer weiteren Variante wird ein Veränderungsgrad gewählt, der zwischen 0,1 % und 99 % gegenüber dem in der Datenbank hinterlegten Referenzmerkmal liegt, wobei auch alle Zwischenwerte dieses Bereiches umfasst sind. Erfolgt nun eine Authentifikation mit einem gefälschten Sicherheitselement, so wird dieses Sicherheitselement als neues Referenzmerkmal in der Datenbank hinterlegt. Erfolgt nun ein weiterer Authentifikationsversuch mit dem originalen Sicherheitselement, so wird dieses sich auf andere Weise dynamisch verändert haben als die Fälschung. In diesem Fall würde das Authentifikationssystem einen Alarm ausgeben, so dass der Benutzer weiß, dass sich eine Fälschung im System befindet. Der Nutzer kann dann entsprechende Maßnahmen ergreifen.

Das Sicherheitselement oder einzelne Module davon können sich auch typisch oder atypisch verändern, beispielsweise indem die Veränderungen regelbedingt ablaufen. So kann beispielweise vorgesehen sein, dass sich Module in eine bestimmte Richtung verdrehen oder eine andere Position relativ zu anderen Modulen einnehmen. Zum Abfragezeitpunkt wird dann die Regelkonformität des Sicherheitselementes abgefragt. Vorzugsweise basiert die Regelkonformität auf einer Materialeigenschaft oder physischen Eigenschaft des Sicherheitselementes oder deren Module. Nicht regelkonforme Erscheinungsbilder des Sicherheitselements oder einzelner Module würden bei der Authentifikation auffallen und einen entsprechenden Alarm auslösen.

In einer bevorzugten Variante des Sicherheitselements sind einzelne Module in unterschiedlichen Ebenen angeordnet, welche relativ zueinander verschiebbar oder verdrehbar sind. Bevorzugt sind auch mehrschichtig aufgebaute Sicherheitselemente. So können beispielsweise unterschiedliche Oberflächen der Module durch eine Drehbewegung oder durch Verschieben in die Erfassungsrichtung bewegt werden.

Die Erfassung des Erscheinungsbilds des Sicherheitselements oder eines Teils davon erfolgt vorzugsweise über einen Sensor. Für eine Authentifikation von unterwegs eignet sich beispielsweise die Optik eines Smartphones. Das damit erhaltene optische Bild wird zur Authentifikation als digitales Abbild übertragen und ggf. in der Datenbank als neues Referenzmerkmal hinterlegt.

Neben einer optischen Erfassung sind auch weitere Erfassungsmethoden zum Nachweis von Sicherheitsmerkmalen möglich, die mit optischen Mitteln nicht ohne weiteres nachweisbar sind. Hierzu zählt beispielsweise die Erfassung von lumineszierenden Stoffen, elektromagnetischen Feldern oder Magnetfeldern. Aus diesem Grund sind in einer bevorzugten Variante ein oder mehrere Module des Sicherheitselements vorzugsweise mit einem Farbstoff, einem Lumineszenzfarbstoff, magnetisierbaren Partikeln, einer magnetischen Oberfläche, einem maschinenlesbaren Code, einem Display oder einem strahlungsemittierenden Element ausgerüstet. Ein strahlungsemittierendes Element ist beispielsweise eine LED oder ein RFID (Radio-frequency identification)-Chip.

In einer bevorzugten Variante umfasst ein Modul des erfindungsgemäßen Sicherheitselements ein Lesegerät für einen RFID-Chip. Auf diese Weise können sich Module auch untereinander beeinflussen. Auch die räumlichen Abstände der Modulanordnung können eine Rolle spielen, wenn Module über entsprechend sensitive Sende-Empfangseinrichtungen verfügen. Passen die Abstände nicht mit dem hinterlegten Profil überein, verläuft die Authentifikation negativ.

Ist ein Modul mit einem Display ausgestattet, so können einzelne Sicherheitsmerkmale, beispielsweise ein Bild, ein Muster oder eine Farbaufmachung direkt auf dem am Modul angebrachten Display angezeigt werden. Das Bild, das Muster oder die Aufmachung des Displays kann zwischen zwei Authentifikationszeitpunkten verändert werden, wodurch ein neues, verändertes Sicherheitsmerkmal geschaffen wird, das dem gesamten Sicherheitselement wiederum ein neues Erscheinungsbild verleiht, welches in der Datenbank als neues Referenzmerkmal hinterlegbar ist.

Zur weiteren Erhöhung der Sicherheit kann neben dem modulartig aufgebauten Sicherheitselement zusätzlich auch eine Vorauthentifikation durchgeführt werden, bei der sich ein Nutzer bei einem Service-Provider über ein Identifikationskennung zunächst anmeldet und als Nutzer authentifiziert, anschließend ein Sicherheitsmerkmal an den Nutzer übertragen wird, der das Sicherheitsmerkmal erfasst und wieder an den Service-Provider zurückübermittelt, wo ein Abgleich des übertragenen und zurück übermittelten Sicherheitsmerkmal und bei Übereinstimmung eine Freigabe erfolgt. Vorzugsweise ist eine unabhängige Authentifikationseinrichtung vorgesehen, welche die Sicherheitsanfragen von mehreren Service-Providern verwaltet, prüft und nach Bedarf freigibt.

Alternativ kann eine Vorauthentifikation erfolgen, indem sich ein Nutzer bei einem Service-Provider über eine Identifikationskennung zunächst anmeldet und als Nutzer authentifiziert, der Service-Provider sich daraufhin bei einer weiteren unabhängigen Authentifikationseinrichtung anmeldet und authentifiziert und der Service-Provider nach erfolgreicher Authentifikation die Nutzeranfrage an die weitere Authentifikationseinrichtung sendet, die weitere Authentifikationseinrichtung daraufhin dem Nutzer und dem Service-Provider ein Sicherheitsmerkmal übermittelt, welches der Nutzer an den Service-Provider und die weitere Authentifikationseinrichtung zurück übermittelt, wobei der Nutzer dann erfolgreich authentifiziert ist, wenn die an den Service-Provider und der weiteren Authentifikationseinrichtung übermittelten Sicherheitsmerkmale übereinstimmen.

Erfindungsgemäß ist das wenigstens eine Sicherheitsmerkmal auf einer Oberfläche des Moduls aufgebracht oder in diesem integriert. So kann beispielsweise das Sicherheitsmerkmal als Tinte auf der Oberfläche des Moduls aufgebracht sein. Daneben sind auch Materialveränderungen eines Moduls möglich, um beispielsweise individuelle Muster oder Risse zu erzeugen. Auch das Material selbst kann Eigenschaften mit sich bringen, die individuell sind und als Sicherheitsmerkmal dienen können. Dazu gehört beispielsweise die Farbe oder auch strahlungsaktive Substanzen, die dem Material bei der Herstellung beigemengt wurden, beispielsweise Farbpartikel oder Magnetpartikel. Ferner sind auch Verformungen einzelner Module möglich. Dabei bestimmen die Form, Position und Anordnung der Module das Erscheinungsbild des Sicherheitselements. Ferner ist auch die Beeinflussung von Modulen untereinander von der Erfindung umfasst. So kann beispielsweise vorgesehen sein, dass sich die Position oder die Eigenschaft eines Modules verändert, indem ein anderes Modul dieses aktiviert oder auf andere Weise dynamisch verändert.

In einer weiterentwickelten Variante kann es auch vorgesehen sein, dass bestimmte Module des Sicherheitselements einem bestimmten Programm, einem Dienst, einem Objekt, einem Zugang, einer Institution oder einer Person zugeordnet werden. So kann beispielsweise ein Finanzinstitut individuelle Module an bestimmte Nutzer oder einen bestimmten Nutzerkreis herausgeben, wodurch eine Eingrenzung der Nutzer möglich wird. Von besonderer Bedeutung ist dies beispielsweise für Behörden oder Sicherheitsdienste, bei denen einzelne Module eine individuelle Aufmachung besitzen und nur von autorisierten Nutzern verwendet werden können. Nicht autorisierte Nutzer werden normalerweise nicht im Besitz solcher Module sein können, was eine mögliche Fälschung oder einen unberechtigten Zugriff weiter erschwert. Vorzugsweise kann eine Musterprüfung vorgesehen sein, bei der das Sicherheitselement daraufhin überprüft wird, ob sich bestimmte Modulbausteine in dem Sicherheitselement befinden und zu einem hinterlegten Referenzmuster passen. Ist beispielsweise ein Nutzer Kunde bei mehreren Finanzinstituten, so kann der Kunde von jedem Finanzinstitut ein individuelles Modul erhalten haben, was Bestandteil seines individuellen Sicherheitselements ist. Für eine erfolgreiche Authentifikation ist es notwendig, dass alle Modulbausteine in dem Sicherheitselement vorhanden sind. Auch kann deren korrekte Position und Richtung relevant sein.

In einer bevorzugten Ausführungsform erzeugen ein oder mehrere Module des Sicherheitselements ein Magnetfeld, das über Bildschirmsensoren, Positionssensoren oder Magnetometer, oder eine andere Erfassungseinrichtung, ggf. zusammen mit weiteren Sicherheitsmerkmalen, erfasst und bei der Authentifikation mit den Referenzmerkmalen verglichen wird. Je nach Anordnung der Module verändert sich das Magnetfeld, was wiederum über die Erfassungseinrichtung (z.B. Magnetometer) detektierbar ist.

Die vorliegende Erfindung betrifft auch eine Authentifikationsvorrichtung, die neben dem bereits erwähnten Sicherheitselement zusätzlich mit einer Erfassungseinrichtung zum Erfassen der Sicherheitsmerkmale und einer Kommunikationseinrichtung zum Übertragen der erfassten Sicherheitsmerkmale zu einer Abgleichvorrichtung ausgerüstet ist. Die Abgleichvorrichtung vergleicht das übermittelte Erscheinungsbild oder eine Eigenschaft des Sicherheitselements zum Zeitpunkt der Authentifikation mit einem in einer zentralen Datenbank hinterlegten Referenzmerkmal.

Vorzugsweise sind die einzelnen Module des Sicherheitselements über eine Steckverbindung, eine Klemmverbindung, eine Rastverbindung, eine Schraubverbindung, eine Schnürverbindung, eine Klettverbindung oder magnetisch als Kopplungsstücke lösbar miteinander verbunden.

Das erfindungsgemäße Sicherheitselement kann beispielsweise mit einem Gegenstand (wie z.B. Schlüsselanhänger) oder einem Schmuckstück verbunden sein. Zur Erhöhung der Sicherheit kann vorgesehen sein, dass ein oder mehrere Module des Sicherheitselements aufgeteilt werden, d.h. für eine gültige Authentifizierung müsste der Nutzer die auf die unterschiedlichen Gegenstände aufgeteilten Module wieder richtig zusammensetzen. Es ist auch möglich, Sicherheitselemente über mehrere Nutzer zu verteilen, sodass ein einzelner Nutzer keinen Zutritt erhält, sondern alle betreffenden Nutzer präsent sein müssen, um Zutritt zu bekommen.

Sicherheitselemente können auch mehrere Ebenen besitzen und aufklappbar sein, wobei die unterschiedlichen Ebenen wie einzelne Module unterschiedliche Berechtigungen und Funktionen besitzen können. Einzelne Ebenen oder Module können beispielsweise Teile des Sicherheitselementes oder das gesamte Sicherheitselement aktiv oder passiv schalten.

Die Erfindung wird in den nachfolgenden Zeichnungen näher erläutert.

### Wege zur Ausführung der Erfindung und gewerbliche Verwertbarkeit:

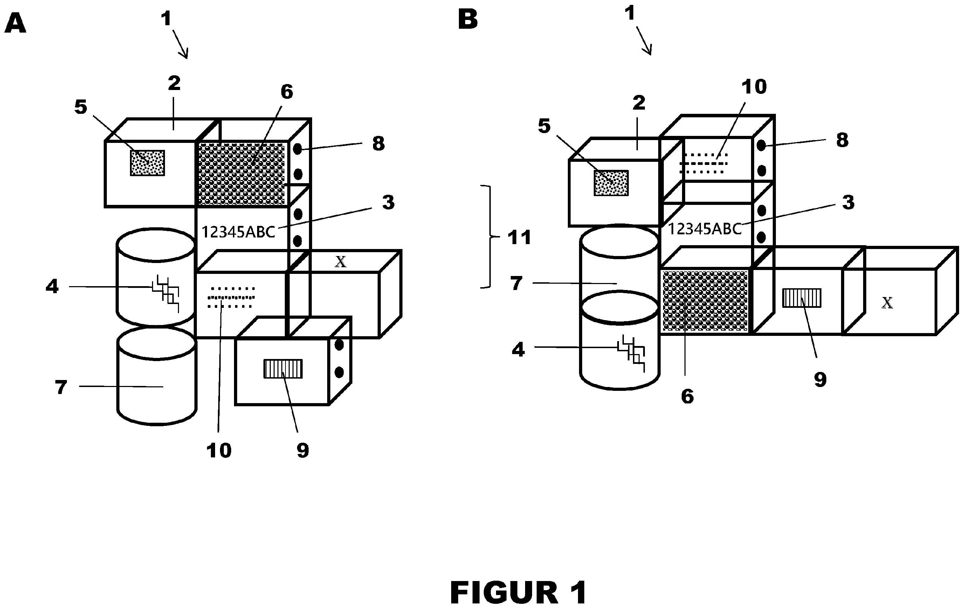

In Fig. 1 ist ein erfindungsgemäßes Sicherheitselement 1 mit mehreren körperhaften, dreidimensionalen Modulen 2 gezeigt, wobei jedes Modul 2 gegenüber einem benachbarten Modul 2 lösbar verbunden ist. Die Verbindung der einzelnen Module 2 erfolgt über Kopplungsstücke 8, die sich an den Modulwänden einzelner Module 2 befinden. Die Kopplungsstücke 8 können beispielsweise eine Steck-, Klemm-, Klapp- oder Rastverbindung eingehen. Statt Kupplungselementen 8 können jedoch auch Klettverschlüsse, Schienen, Ketten oder andere Verbindungsarten vorgesehen sein.

Jedes Modul 2 besitzt eine Anzahl unterschiedlicher Sicherheitsmerkmale 11, wobei eine Auswahl von Sicherheitsmerkmalen 11 ein individuelles Erscheinungsbild ergeben, die einem bestimmten Nutzer, einem Objekt, einer Person oder einer Aktion zugeordnet werden können. Solche Sicherheitsmerkmale 11 sind beispielsweise ein Code 3 oder ein Muster 10, die auf einer Oberfläche eines Moduls 2 aufgebracht sind. Ein zusätzlicher dynamischer Code 3 ist bevorzugt. Dynamische Codes 3 haben die Eigenschaft, sich innerhalb eines Zeitintervalls zu verändern.

Daneben können die Sicherheitsmerkmale11 auch direkt in das Material eingebracht sein, beispielsweise in Form von Rissen, Sprüngen oder Ausnehmungen 4. Ein Modul 2 kann auch eine Anzeigevorrichtung in Form eines Displays 5 aufweisen, auf dem wiederum unterschiedliche, individuelle Sicherheitsmerkmale, beispielsweise in Form eines Bildes, Musters oder unterschiedlichen Farbgebungen angezeigt werden können. Dabei können sich die Sicherheitsmerkmale 11 zeitweise verändern. Bei einem Display 5 kann beispielsweise ein verändertes Bild angezeigt werden, wodurch ein dynamisches Sicherheitsmerkmal 11 entsteht.

In einem weiteren Modul 2 können ferner Farb- oder Magnetpartikel 6 enthalten sein. Bei den Farbpartikeln kann es sich beispielsweise um Lumineszenzfarbstoffe handeln. Auch andere maschinenlesbare Stoffe sind denkbar.

Ein weiteres Modul 2 kann auch selbst magnetisch sein, indem es aus einem magnetischen Material 7 besteht. Daneben sind auch Strahlungs- oder Energiequellen 9 auf einem Modul 2 als Sicherheitsmerkmal 11 anbringbar, beispielsweise eine Lichtquelle (z.B. LED) oder ein RFID (Radio-frequency identification)-Chip. Über entsprechende Sender-Empfänger-Systeme können solche Chips ausgelesen werden. Mehrere Module mit solchen Chips können auch zu einem als dynamische Kombination erkennbaren Sicherheitselement 1 führen, welches je nach Anzahl und Lage der Module 2 zusätzliche oder alternative Zugänge erlaubt. Ähnliches gilt auch für Magnetfelder, welche sich bei einer Veränderung der Modulanordnung ebenfalls verändern und damit ein neues Sicherheitsmerkmal 11 generieren, das dynamisch verändert ist und über Sonden erfassbar ist. Außerdem können die Module 2 auch als Lesemodule ausgestaltet sein, welche andere Module 2 direkt innerhalb des Sicherheitselementes 1 identifizieren und die korrekte Identifikation sichtbar oder auslesbar anzeigen. Auch die Aktivierung der identifizierten Module 2 ist dadurch möglich.

In Fig. 1A ist eine Variante gezeigt, bei der unterschiedliche Module 2, die mit einzelnen Sicherheitsmerkmalen 11 versehen sind, in einer bestimmten Art und Weise angeordnet sind. Durch die lösbare Verbindung oder ein Verdrehen der Module 2 ist eine Veränderung der Aufmachung des Sicherheitselements 11 möglich, wodurch sich auch das Erscheinungsbild der Summe der Sicherheitsmerkmale 11, aber auch einzelne Sicherheitsmerkmale 11 verändern. Diese Situation ist in Fig. 1B dargestellt, wo einzelne Module 2 gegenüber der Ausgangssituation verändert angeordnet sind.

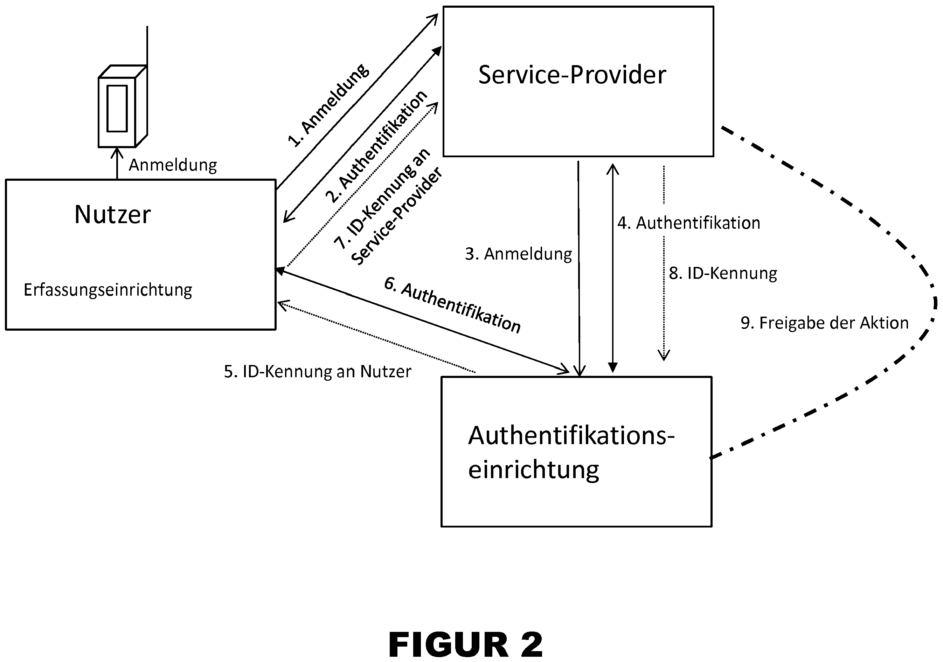

In Fig. 2 ist eine Variante gezeigt, bei der die Anwendung des erfindungsgemäßen Sicherheitselements im Rahmen einer Authentifikationsvorrichtung genutzt werden kann. Dabei verläuft die Authentifikation eines Nutzers bei einem Dienstleistungsanbieter (Service-Provider) über mehrere Schritte. Beim ersten Schritt meldet sich der Nutzer beim Service-Provider an und es erfolgt eine Authentifikation des Nutzers beim Service-Provider. Der Service-Provider meldet sich wiederum in einem weiteren dritten Schritt bei einer unabhängigen Authentifikationseinrichtung an und wird über ein festgelegtes Authentifikationsverfahren in einem vierten Schritt authentifiziert. Anschließend wird ein Identifikationskennzeichen (beispielsweise ein Aktion-Code) an den Nutzer versendet, wenn die Authentifikation des Nutzers erfolgreich ist. Der Nutzer (oder im Hintergrund seine Vorrichtung) sendet die Identifikationskennung in dem gezeigten siebten Schritt an den Service-Provider, welcher ihn schließlich an die Authentifikationseinrichtung übermittelt. Die Authentifikationseinrichtung überprüft die Identifikationskennung dahingehend, ob sie mit der ursprünglich versendeten Kennung übereinstimmt. Erst dann erhält der Service-Provider die Freigabe, um den vom Nutzer angeforderten Dienst auszuführen.

Alternativ kann der Nutzer auch direkt die Authentifikationseinrichtung im ersten Schritt kontaktieren und sich authentifizieren. Die Authentifikationseinrichtung verbindet sich dann mit dem Service-Provider und authentifiziert sich ebenfalls über eine zuvor festgelegte Authentifikationsmethode.

In einer alternativen Variante erfolgt zunächst eine Authentifizierung eines Nutzers gegenüber seiner Kommunikationsvorrichtung, beispielsweise ein Mobilgerät, durch Eingabe und Übersendung einer Nutzerkennung. Dies kann beispielsweise dadurch erfolgen, dass ein individuelles Erscheinungsbild des erfindungsgemäßen Sicherheitselements mit einer Smartphone-Kamera oder anderen Sensoren erfasst und mit einem hinterlegten Referenzbild verglichen wird. Dazu gehören beispielsweise Positionssensoren oder Magnetometer.

Nach erfolgreicher Anmeldung bei der Kommunikationseinrichtung erfolgt die Anmeldung des Nutzers bei einem Service-Provider, der beispielsweise einen bestimmten Dienst (z.B. eine Finanztransaktionsdienstleistung) anbietet. Auch dies kann über ein erfindungsgemäßes Sicherheitselement erfolgen, das als ID-Schlüssel zur Authentifikation herangezogen wird. Nach erfolgreicher Anmeldung des Nutzers beim Service-Provider antwortet dieser nicht direkt dem Nutzer, sondern meldet sich über eine Identifikationskennung bei einer weiteren Authentifikationseinrichtung an. Nach erfolgreicher Authentifizierung und Aufbau dieser Verbindung sendet der Service-Provider die Nutzeranfrage und ggf. weitere Informationen oder Daten an die weitere Authentifikationseinrichtung. Diese sendet dem Nutzer wiederum eine individuelle Identifikationskennung, beispielsweise in Form von Sicherheitselementen (bzw. deren Erscheinungsbilder), wie sie in der vorliegenden Anmeldung beschrieben sind. Nach Abschluss dieser doppelten Identifizierung sind der Nutzer und der Service-Provider bei der unabhängigen weiteren Authentifikationseinrichtung sicher authentifiziert und es kann ein weiterer Verbindungskanal eröffnet werden. Darüber sendet die weitere Authentifikationseinrichtung sowohl dem Nutzer als auch dem Service-Provider eine Identifikationskennung, welche der Nutzer beim Service-Provider zur Authentifizierung verwendet.

Eine Identifikationskennung kann beispielsweise auch als Bild versendet werden, das dem Nutzer auf einem Bildschirm angezeigt wird. Der Nutzer kann diese Identifikationskennung auslesen und die Anmeldung damit erfolgreich abschließen. Vorzugsweise ist die übertragene Identifikationskennung ein dem Nutzer zugeordnetes eindeutiges Sicherheitselement gemäß der Erfindung, welches sich in der hier beschriebenen Weise dynamisch weiter verändern kann. Bei dieser Vorgehensweise kann über eine unabhängige Authentifikationseinrichtung eine unbegrenzte Anzahl von Nutzern und Service-Providern separat authentifiziert und anschließend sicher untereinander verbunden werden.

Erfolgt eine Authentifizierung beim Service-Provider bzw. eine Überprüfung durch die weitere Authentifikationseinrichtung, wird ein Abbild des erfindungsgemäßen Sicherheitselements an den Nutzer übertragen, welches als Referenzmerkmal in einer Datenbank beim Service-Provider und/oder der weiteren Authentifikationseinrichtung hinterlegt ist. Dieses Abbild kann der Nutzer für die doppelte Authentifizierung mit seiner Mobiltelefonkamera fotografieren und zur Identifikation zurückschicken. Gleichzeitig oder alternativ ist es auch möglich, dass der Nutzer ein verändertes Sicherheitselement überträgt, welches das Referenzmerkmal ersetzt. Hierzu muss er lediglich die einzelnen Module des Sicherheitselements so verändern, dass ein verändertes Sicherheitselement entsteht.

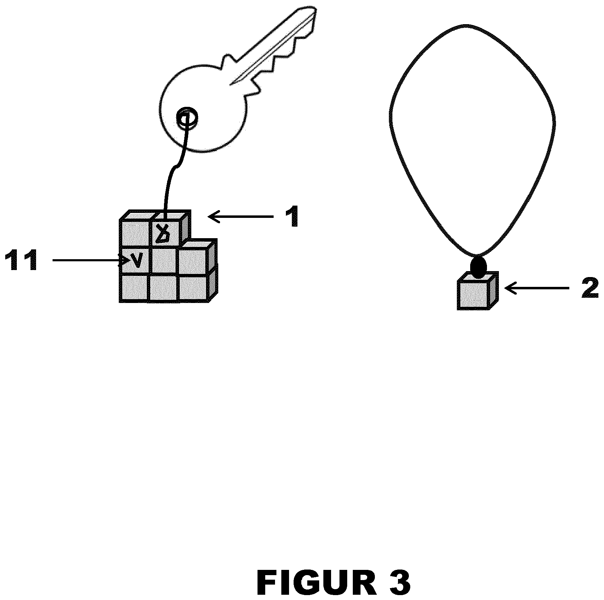

In Fig. 3 ist eine Ausführungsvariante gezeigt, bei der ein oder mehrere Module des erfindungsgemäßen Sicherheitselements an unterschiedlichen Orten aufbewahrt werden. In dem gezeigten Ausführungsbeispiel befinden sich eine Modulanordnung am Schlüsselanhänger und ein weiteres Modul beispielsweise an einer Halskette. Durch die Aufteilung der Module entsteht ein zeitweise inaktiviertes Sicherheitselement, wobei ein möglicher Fälscher nicht weiß, wie er die einzelnen Module, selbst wenn er im Besitz des Schlüsselanhängers und der Halskette wäre, wieder zu dem aktuell gültigen Sicherheitselement zusammenfügen muss. Durch die modulartige Aufmachung des Sicherheitselements ist somit eine geteilte Aufbewahrung möglich, was die Sicherheit zusätzlich erhöht. Ferner können einzelne oder mehrere Module auch bewusst durch den Nutzer verändert werden, beispielsweise indem ein Modulbaustein bewusst in eine veränderte Position gedreht wird. Eine Authentifikation würde dann fehlschlagen. In diesem Fall muss der Nutzer für die Aktivierung des Sicherheitselements das betreffende Modul bzw. die Module in die richtige Position überführen, damit die Authentifikation positiv verläuft.

Durch den modulartigen Aufbau des Sicherheitselements ist eine Vielzahl von Kombinationen möglich, welche eine charakteristische Aufmachung des erfindungsgemäßen Sicherheitselements und damit des Erscheinungsbildes prägen. Dabei kann vorgesehen sein, dass sich lediglich ein Teil des Sicherheitselements im Rahmen einer Authentifizierung verändert, während ein weiterer Teil statisch, d.h. unverändert bleibt. Durch eine zeitweise Inaktivierung des Sicherheitselements, indem beispielsweise Module bewusst so verändert werden, dass sie das Sicherheitselement verändern, wodurch keine positive Authentifikation mehr möglich ist oder indem die Module an unterschiedlichen Orten aufbewahrt werden, wird die Sicherheit nochmals zusätzlich erhöht. Der Nutzer muss nämlich dann für eine erfolgreiche positive Authentifikation das Sicherheitselement zunächst korrekt zusammenfügen, um sich positiv zu authentifizieren.

## Patentansprüche

1. Verfahren zur Authentifikation eines Objekts oder einer Person durch ein dem Objekt oder der Person individuell zugeordnetes Sicherheitselement, das mehrere Sicherheitsmerkmale für die Authentifikation des Objekts oder der Person aufweist, wobei wenigstens ein Sicherheitsmerkmal des Sicherheitselements zwischen zwei Abfragezeitpunkten veränderbar ist und das Erscheinungsbild oder eine Eigenschaft des Sicherheitselements in einer zentralen Datenbank als Referenzmerkmal für einen Abgleich hinterlegt wird, wobei das Sicherheitselement aus mehreren veränderbaren Modulen mit mehreren Oberflächen zusammengesetzt wird, wobei zumindest ein Teil der Module spezifische Sicherheitsmerkmale aufweist, wobei beim Abfragezeitpunkt das Erscheinungsbild oder eine Eigenschaft des veränderten Sicherheitselements erfasst und zur Authentifikation des Objekts oder der Person mit dem in der Datenbank hinterlegten Referenzmerkmal verglichen wird, **dadurch gekennzeichnet, dass** das Sicherheitselement einen dynamischen Veränderungsprozess zwischen zwei Abfragezeitpunkten durchläuft, indem entweder wenigstens ein Sicherheitsmerkmal eines Moduls verändert wird oder einzelne oder alle Module zu einem neuen, veränderten Sicherheitselement kombiniert werden.

2. Verfahren nach Anspruch 1, **dadurch gekennzeichnet, dass** bei einer positiven Authentifikation ein verändertes Sicherheitselement als neues Referenzmerkmal zum Abfragezeitpunkt hinterlegt wird.

3. Verfahren nach Anspruch 1, **dadurch gekennzeichnet, dass** für eine positive Authentifikation vorgesehen ist, dass das zum Abfragezeitpunkt vorliegende Sicherheitselement sich gegenüber dem in der Datenbank hinterlegten Referenzmerkmal teilweise verändert hat, wobei der Veränderungsgrad so bestimmt ist, dass sich bestimmen lässt, dass das zum Abfragezeitpunkt vorliegende Sicherheitselement aus dem in der Datenbank hinterlegten Referenzmerkmal hervorgegangen ist.

4. Verfahren nach einem der vorhergehenden Ansprüche, **dadurch gekennzeichnet, dass** wenigstens ein Sicherheitsmerkmal des Sicherheitselementes oder eines Moduls davon, dessen Position, Aufmachung, Erscheinungsbild, Lage im Verhältnis zu anderen Modulen oder eine sonstige Eigenschaft verändert wird, wodurch ein geändertes Erscheinungsbild oder eine geänderte Eigenschaft des Sicherheitselementes oder Modules entsteht, das vorzugsweise mit dem in der Datenbank hinterlegten Referenzmerkmal verwandt ist oder aus diesem hervorgegangen ist.

5. Verfahren nach einem der vorhergehenden Ansprüche, **dadurch gekennzeichnet**, das zum Abfragezeitpunkt abgefragt wird, ob die dynamische Veränderung des Sicherheitselements regelkonform ist, wobei die Regelkonformität auf einer Materialeigenschaft oder physischen Eigenschaft des Sicherheitselementes oder deren Module basiert.

6. Verfahren nach einem der vorhergehenden Ansprüche, **dadurch gekennzeichnet, dass** zunächst eine Vorauthentifikation erfolgt, bei der sich ein Nutzer bei wenigstens einem Service-Provider über eine Identifikationskennung zunächst anmeldet und als Nutzer authentifiziert, anschließend ein übergeordnetes Sicherheitsmerkmal von einer unabhängigen Authentifikationsstelle abgefragt und ein dynamischer Code ausgetauscht wird sowie ein handlungsspezifischer Aktion-Code generiert und an den Nutzer gesandt wird, welcher via Service-Provider wieder an die unabhängige Authentifikationsstelle zurückgesandt wird, um die Handlung als geprüft auszuführen, wobei ein Abgleich des übertragenen und zurück übermittelten Sicherheitsmerkmals und bei Übereinstimmung eine Freigabe erfolgt.

7. Verfahren nach einem der vorhergehenden Ansprüche, **dadurch gekennzeichnet, dass** zunächst eine Vorauthentifikation erfolgt, bei der sich ein Nutzer bei einem Service-Provider über eine Identifikationskennung zunächst anmeldet und als Nutzer authentifiziert, der Service-Provider sich daraufhin bei einer weiteren unabhängigen Authentifikationseinrichtung anmeldet und authentifiziert und der Service-Provider nach erfolgreicher Authentifikation die Nutzeranfrage an die weitere Authentifikationseinrichtung sendet, die weitere Authentifikationseinrichtung daraufhin dem Nutzer und dem Service-Provider ein Sicherheitsmerkmal übermittelt, welches der Nutzer an den Service-Provider und die weitere Authentifikationseinrichtung zurück übermittelt, wobei der Nutzer dann erfolgreich authentifiziert ist, wenn die an den Service-Provider und der weiteren Authentifikationseinrichtung übermittelten Sicherheitsmerkmale übereinstimmen.

8. Verfahren nach einem der vorhergehenden Ansprüche, **dadurch gekennzeichnet, dass** das wenigstens eine Sicherheitsmerkmal auf einer Oberfläche des Moduls aufgebracht wird, in diesem integriert wird oder aus einer Materialeigenschaft besteht und dass die einzelnen Module zufällig oder einer Regel folgend miteinander zu dem Sicherheitselement kombiniert werden.

9. Verfahren nach einem der vorhergehenden Ansprüche, **dadurch gekennzeichnet, dass** das Sicherheitselement deaktiviert wird, indem eine Reduktion der Berechtigungen durch Entnahme oder Hinzufügen von Modulen oder Sicherheitsmerkmalen des Sicherheitselementes erfolgt, wobei auch neue Module aktiviert oder bestehende Module deaktiviert werden können.

10. Verfahren nach einem der vorhergehenden Ansprüche, **dadurch gekennzeichnet, dass** ein oder mehrere individuell ausgestaltete Module des Sicherheitselements einem spezifischen Programm, einem Dienst, einem Objekt, einem Zugang, einer Institution oder einer Person zugeordnet werden.

11. Verfahren nach einem der vorhergehenden Ansprüche, **dadurch gekennzeichnet, dass** ein oder mehrere Module des Sicherheitselements ein Magnetfeld erzeugen, dass über Bildschirmsensoren oder eine andere Erfassungseinrichtung, gegebenenfalls zusammen mit weiteren Sicherheitsmerkmalen, erfasst und bei der Authentifikation mit den Referenzmerkmalen verglichen wird.

12. Authentifikationsvorrichtung zur Authentifikation eines Objekts oder einer Person, umfassend
- ein dem Objekt oder der Person individuell zugeordnetes Sicherheitselement (1) mit mehreren Sicherheitsmerkmalen (11) für die Authentifikation des Objekts oder der Person, wobei wenigstens ein Sicherheitsmerkmal (11) des Sicherheitselements (1) zwischen zwei Abfragezeitpunkten veränderbar ist und das Erscheinungsbild oder eine Eigenschaft des Sicherheitselements (1) in einer zentralen Datenbank als Referenzmerkmal für einen Abgleich hinterlegt ist,
- eine Erfassungseinrichtung zum Erfassen der Sicherheitsmerkmale (11),
- eine Kommunikationseinrichtung zum Übertragen der erfassten Sicherheitsmerkmale (11) zu einer Abgleichvorrichtung, die das übermittelte Erscheinungsbild oder eine Eigenschaft des Sicherheitselements (1) mit einem in einer zentralen Datenbank hinterlegten Referenzmerkmal vergleicht, wobei das Sicherheitselement (1) aus mehreren veränderbaren Modulen (2) mit mehreren Oberflächen zusammengesetzt ist, wobei zumindest ein Teil der Module (2) spezifische Sicherheitsmerkmale (11) aufweist und einzelne oder alle Module (2) zu einem neuen, veränderten Sicherheitselement (1) kombinierbar sind, **dadurch gekennzeichnet, dass** das Sicherheitselement zwischen zwei Abfragezeitpunkten einen dynamischen Veränderungsprozess durchläuft, bei dem wenigstens ein Sicherheitsmerkmal des Sicherheitselementes oder eines Moduls davon, dessen Position, Aufmachung, Erscheinungsbild, Lage im Verhältnis zu anderen Modulen oder eine sonstige Eigenschaft verändert wird, wodurch ein geändertes Erscheinungsbild oder eine geänderte Eigenschaft des Sicherheitselementes oder Modules entsteht, und dass die Abgleichvorrichtung das übermittelte Erscheinungsbild oder eine Eigenschaft des Sicherheitselementes (1) mit einem in einer zentralen Datenbank hinterlegten Referenzmerkmal vergleicht.

13. Vorrichtung nach Anspruch 12, **dadurch gekennzeichnet, dass** ein oder mehrere Module (2) des Sicherheitselements (1) als Sicherheitsmerkmal (11) individuell ausgerüstet sind mit einem Farbstoff, einem Lumineszenzfarbstoff, Rissen oder Sprüngen (4), magnetisierbaren Partikeln (6), einer magnetischen Oberfläche (7), einem maschinenlesbaren Code (3), einem Display (5), einem Muster (10) und/oder einem strahlungsemittierenden Element (9).

14. Vorrichtung nach Anspruch 12 oder 13, **dadurch gekennzeichnet, dass** die einzelnen Module (2) des Sicherheitselements (1) über eine Steckverbindung, eine Klemmverbindung, eine Rastverbindung, eine Schraubverbindung, eine Schnürverbindung, eine Klettverbindung oder magnetisch als Kopplungsstücke (8) lösbar miteinander verbunden sind.

15. Vorrichtung nach einem der vorhergehenden Ansprüche, **dadurch gekennzeichnet, dass** die einzelnen Module (2) des Sicherheitselements (1) mehrschichtig, verdrehbar, verformbar, verbindbar und/oder beweglich ausgeführt sind.

16. Vorrichtung nach einem der vorhergehenden Ansprüche, **dadurch gekennzeichnet, dass** die Abgleichvorrichtung bei einer positiven Authentifikation ein verändertes Sicherheitselement als neues Referenzmerkmal hinterlegt.

## Claims

1. A method for authentication of an object or a person through a security element individually assigned to the object or person having multiple security features for authentication of the object or the person, wherein at least one security feature of the security element is changeable between two enquiry time-points and the visual appearance or a property of the security element is stored in a central database as reference feature for comparison, wherein the security element is composed of a plurality of changeable modules having a plurality of surfaces, wherein at least a part of the modules has specific security features, wherein at the time of query the visual appearance or a characteristic of the modified security element is detected and compared for authentication of the object or person with the reference feature stored in the database, **characterized in that** the security element undergoes a dynamic change process between two enquiry time-points, in which either at least one security feature of a module is changed, or individual or all modules are combined into a new, modified security element.

2. The method according to claim 1, **characterized in that,** in the case of positive authentication a modified security element is stored as a new reference feature at the enquiry time-point.

3. The method according to claim 1, **characterized in that** for a positive authentication it is required that the security element present at the time of the query has changed partially vis-à-vis the reference feature stored in the database, whereby the degree of change is determined so that it can be determined that the security element present at the enquiry time-point is derived from the reference feature stored in the database.

4. The method according to one of the preceding claims, **characterized in that** at least one security feature of the security element or a module thereof, whose position, presentation, visual appearance, location in relation to other modules or any other characteristic is changed, whereby a modified visual appearance or a changed property of the security element or module is generated, which is preferably related to or derived from the reference feature stored in the database.

5. The method according to any one of the preceding claims, **characterized in that** it is queried at the enquiry time-point whether the dynamic change of the security element is in conformity with the rules, wherein the conformity is based on a material property or physical property of the security element or its modules.

6. The method according to any one of the preceding claims, **characterized in that** first a pre-authentication is carried out, wherein a user initially logs on to at least one service provider via an identification identifier and authenticates himself as a user, then a superordinate security feature is queried by an independent authentication authority, and a dynamic code is exchanged, and an action-specific action code is generated and sent to the user, which is sent back to the independent authentication authority via a service provider in order to execute the action as checked, whereby a comparison of the transmitted and re-transmitted security feature is carried out and a release takes place upon conformity.

7. The method according to any one of the preceding claims, **characterized in that** first a pre-authentication is carried out, in which a user first logs in to a service provider via an identification identifier and authenticates himself as a user, the service provider then logs on to a further independent authentication facility and authenticates himself, and the service provider after successful authentication transmits the user request to the further authentication facility, the further authentication facility then transmits a security feature to the user and the service provider, which the user transmits back to the service provider and the further authentication facility, whereby the user is then successfully authenticated, if the security features transmitted to the service provider and the further authentication facility correspond to each other.

8. The method according to any one of the preceding claims, **characterized in that** the at least one security feature is applied to or integrated in a surface of the module or consists of a material property, and that the individual modules are combined randomly or according to a rule with one another to form the security element.

9. The method according to one of the preceding claims, **characterized in that** the security element is deactivated by reducing the authorizations via removing or adding modules or security features of the security element, wherein new modules can also be activated or existing modules can be deactivated.

10. The method according to one of the preceding claims, **characterized in that** one or more modules, individually configured, of the security element are assigned to a specific program, a service, an object, an access, an institution or a person.

11. The method according to one of the preceding claims, **characterized in that** one or more modules of the security element generate a magnetic field that is detected via screen sensors or another detection device, if required, along with further security features and is compared with the reference features during authentication.

12. An authentication device for authenticating an object or a person, comprising a security element (1) which is individually assigned to the object or the person having a plurality of security features (11) for authenticating the object or the person, whereby at least a security feature (11) of the security element (1) is changeable between two enquiry time-points and the visual appearance or a property of the security element (1) is stored in a central database as a reference feature for comparison, a detection device for detecting the security features (11), a communication device for transmitting the detected security features (11) to a matching device which compares the transmitted visual appearance or a property of the security element (1) with a reference feature stored in a central database, wherein the security element (1) is composed of several changeable modules (2) having a plurality of surfaces, wherein at least a part of the modules (2) has specific security features (11) and individual or all modules (2) are combinable to a new, changed security element (1), **characterized in that** the security element undergoes a dynamic change process between two enquiry time-points, in which at least one security feature of the security element or a module thereof, its position, presentation, visual appearance, location in relation to other modules or any other property is changed, whereby a modified appearance or a modified property of the security element or module arises, and that the matching device compares the transmitted appearance or a feature of the security element (1) with a reference feature stored in a central database.

13. The device according to claim 12, **characterized in that** one or more modules (2) of the security element (1) as security feature (11) are individually provided with a dye, a luminescent dye, flaws or cracks (4), magnetizable particles (6), a magnetic surface (7), a machine-readable code (3), a display (5), a pattern (10) and/or a radiation-emitting element (9).

14. The device according to claim 12 or 13, **characterized in that** the individual modules (2) of the security element (1) are detachably interconnected via a plug connection, a clamp connection, a snap connection, a screw connection, a string connection, a Velcro connection or magnetically as coupling pieces (8).

15. The device according to one of the preceding claims, **characterized in that** the individual modules (2) of the security element (1) are of multilayered, rotatable, deformable, connectable and/or movable designed.

16. The device according to one of the preceding claims, **characterized in that** the matching device stores a modified security element as a new reference feature in the event of a positive authentication.

## Revendications

1. Procédé d'authentification d'un objet ou d'une personne par un élément de sécurité qui est associé individuellement à l'objet ou à la personne et qui présente plusieurs caractéristiques de sécurité pour l'authentification de l'objet ou de la personne, au moins une caractéristique de sécurité de l'élément de sécurité pouvant être modifiée entre deux instants d'interrogation et l'apparence ou une propriété de l'élément de sécurité étant enregistrée dans une base de données centrale en tant que caractéristique de référence pour une comparaison, l'élément de sécurité étant composé de plusieurs modules modifiables à plusieurs surfaces, au moins une partie des modules présentant des caractéristiques de sécurité spécifiques, l'apparence ou une propriété de l'élément de sécurité modifié étant détectée à l'instant d'interrogation et comparée à la caractéristique de référence enregistrée dans la base de données afin d'authentifier l'objet ou la personne, **caractérisé en ce que** l'élément de sécurité subit un processus de modification dynamique entre deux instants d'interrogation, soit au moins une caractéristique de sécurité d'un module étant modifiée, soit certains ou tous les modules étant combinés pour former un nouvel élément de sécurité modifié.

2. Procédé selon la revendication 1, **caractérisé en ce que**, dans le cas d'une authentification positive, un élément de sécurité modifié est enregistré comme nouvelle caractéristique de référence à l'instant d'interrogation.

3. Procédé selon la revendication 1, **caractérisé en ce que**, pour une authentification positive, il est prévu que l'élément de sécurité présent à l'instant d'interrogation ait partiellement changé par rapport à la caractéristique de référence enregistrée dans la base de données, le degré de changement étant déterminé de telle manière qu'il puisse être déterminé que l'élément de sécurité présent à l'instant d'interrogation est issu de la caractéristique de référence enregistrée dans la base de données.

4. Procédé selon l'une des revendications précédentes, **caractérisé en ce qu'**au moins une caractéristique de sécurité de l'élément de sécurité ou d'un module de celui-ci, sa position, sa présentation, son apparence, sa position par rapport à d'autres modules ou une autre propriété est modifiée, ce qui a pour effet de produire une apparence modifiée ou une propriété modifiée de l'élément de sécurité ou du module, qui est de préférence apparentée à la caractéristique de référence enregistrée dans la base de données ou est issue de celle-ci.

5. Procédé selon l'une des revendications précédentes, **caractérisé en ce qu'**à l'instant d'interrogation, il est demandé si la modification dynamique de l'élément de sécurité est conforme à la règle, la conformité à la règle étant basée sur une propriété matérielle ou physique de l'élément de sécurité ou de ses modules.

6. Procédé selon l'une des revendications précédentes, **caractérisé en ce qu'**une authentification préalable est d'abord effectuée, lors de laquelle un utilisateur s'inscrit d'abord auprès d'au moins un fournisseur de services au moyen d'un code d'identification et s'authentifie en tant qu'utilisateur, puis une caractéristique de sécurité supérieure est interrogée par un centre d'authentification indépendant et un code dynamique est échangé et un code d'action spécifique à l'action est généré et envoyé à l'utilisateur, lequel est renvoyé au centre d'authentification indépendant via le fournisseur de services afin d'exécuter l'action en tant qu'action vérifiée, une comparaison entre la caractéristique de sécurité transmise et renvoyée étant effectuée et, en cas de concordance, une validation étant effectuée.

7. Procédé selon l'une des revendications précédentes, **caractérisé en ce qu'**une authentification préalable est d'abord effectuée, lors de laquelle un utilisateur s'inscrit d'abord auprès d'un fournisseur de services au moyen d'un code d'identification et s'authentifie en tant qu'utilisateur, puis le fournisseur de services s'inscrit et s'authentifie auprès d'un autre organisme d'authentification indépendant, et, après une authentification réussie, le fournisseur de services envoie la demande de l'utilisateur à l'autre organisme d'authentification, l'autre organisme d'authentification transmet ensuite à l'utilisateur et au fournisseur de services une caractéristique de sécurité que l'utilisateur renvoie au fournisseur de services et à l'autre organisme d'authentification, l'utilisateur étant authentifié avec succès si les caractéristiques de sécurité transmises au fournisseur de services et à l'autre organisme d'authentification concordent.

8. Procédé selon l'une des revendications précédentes, **caractérisé en ce que** ladite au moins une caractéristique de sécurité est appliquée sur une surface du module, est intégrée dans celui-ci ou consiste en une propriété matérielle, et que les différents modules sont combinés entre eux de manière aléatoire ou selon une règle pour former l'élément de sécurité.

9. Procédé selon l'une des revendications précédentes, **caractérisé en ce que** l'élément de sécurité est désactivé en effectuant une réduction des autorisations par suppression ou ajout de modules ou caractéristiques de sécurité de l'élément de sécurité, de nouveaux modules pouvant également être activés ou des modules existants être désactivés.

10. Procédé selon l'une des revendications précédentes, **caractérisé en ce qu'**un ou plusieurs modules configurés individuellement de l'élément de sécurité sont associés à un programme spécifique, à un service, à un objet, à un accès, à une institution ou à une personne.

11. Procédé selon l'une des revendications précédentes, **caractérisé en ce qu'**un ou plusieurs modules de l'élément de sécurité génèrent un champ magnétique qui est détecté par des capteurs d'écran ou un autre moyen de détection, le cas échéant en même temps que d'autres caractéristiques de sécurité, et comparé avec les caractéristiques de référence lors de l'authentification.

12. Dispositif d'authentification pour authentifier un objet ou une personne, comprenant
- un élément de sécurité (1) associé individuellement à l'objet ou à la personne et présentant plusieurs caractéristiques de sécurité (11) pour l'authentification de l'objet ou de la personne, au moins une caractéristique de sécurité (11) de l'élément de sécurité (1) pouvant être modifiée entre deux instants d'interrogation et l'apparence ou une propriété de l'élément de sécurité (1) étant enregistrée dans une base de données centrale en tant que caractéristique de référence pour une comparaison,
- un moyen de détection pour détecter les caractéristiques de sécurité (11),
- un moyen de communication pour transmettre les caractéristiques de sécurité (11) détectées à un dispositif de comparaison qui compare l'apparence transmise ou une propriété de l'élément de sécurité (1) avec une caractéristique de référence enregistrée dans une base de données centrale, l'élément de sécurité (1) étant composé de plusieurs modules modifiables (2) à plusieurs surfaces, au moins une partie des modules (2) présentant des caractéristiques de sécurité (11) spécifiques, et certains ou tous les modules (2) pouvant être combinés pour former un nouvel élément de sécurité modifié (1), **caractérisé en ce que** l'élément de sécurité subit un processus de modification dynamique entre deux instants d'interrogation, lors duquel au moins une caractéristique de sécurité de l'élément de sécurité ou d'un module de celui-ci est soumise à une modification dynamique, sa position, sa présentation, son apparence, sa position par rapport à d'autres modules ou une autre propriété est modifiée, ce qui a pour effet de produire une apparence modifiée ou une propriété modifiée de l'élément de sécurité ou du module, et que le dispositif de comparaison compare l'apparence transmise ou une propriété de l'élément de sécurité (1) avec une caractéristique de référence enregistrée dans une base de données centrale.

13. Dispositif selon la revendication 12, **caractérisé en ce qu'**un ou plusieurs modules (2) de l'élément de sécurité (1) sont équipés individuellement en tant que caractéristique de sécurité (11) d'un colorant, d'un colorant luminescent, de fissures ou craquelures (4), de particules magnétisables (6), d'une surface magnétique (7), d'un code lisible par machine (3), d'un affichage (5), d'un motif (10) et/ou d'un élément émetteur de rayonnement (9).

14. Dispositif selon la revendication 12 ou 13, **caractérisé en ce que** les différents modules (2) de l'élément de sécurité (1) sont reliés entre eux de manière amovible par une liaison par enfichage, une liaison par serrage, une liaison par encliquetage, une liaison par vissage, une liaison par laçage, une liaison auto-agrippante ou de manière magnétique sous forme de pièces d'accouplement (8).

15. Dispositif selon l'une des revendications précédentes, **caractérisé en ce que** les différents modules (2) de l'élément de sécurité (1) sont réalisés multicouches, rotatifs, déformables, connectables et/ou mobiles.

16. Dispositif selon l'une des revendications précédentes, **caractérisé en ce que**, en cas d'authentification positive, le dispositif de comparaison enregistre un élément de sécurité modifié en tant que nouvelle caractéristique de référence.
